(19) Europäisches Patentamt
European Patent Office
Office européen des brevets

(11) EP 2 213 691 A1

(12) EUROPEAN PATENT APPLICATION

(43) Date of publication:
**04.08.2010 Bulletin 2010/31**

(21) Application number: **10250141.8**

(22) Date of filing: **28.01.2010**

(51) Int Cl.:
***C08F 230/08*** (2006.01) ***C08F 4/70*** (2006.01)
***C08F 32/08*** (2006.01) ***B01D 69/00*** (2006.01)
***B01D 71/44*** (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **28.01.2009 JP 2009016812**

(71) Applicants:
- **Shin-Etsu Chemical Co., Ltd.**
  **Tokyo (JP)**
- **RIKEN**
  **Wako-shi,**
  **Saitama (JP)**

(72) Inventors:
- **Tetsuka, Hiroaki**
  **Matsuida-machi**
  **Annaka-shi**
  **Gunma-ken (JP)**
- **Hagiwara, Mamoru**
  **Matsuida-machi**
  **Annaka-shi**
  **Gunma-ken (JP)**
- **Kaita, Shojiro**
  **Wako-shi**
  **Saitama (JP)**

(74) Representative: **Stoner, Gerard Patrick et al**
**Mewburn Ellis LLP**
**33 Gutter Lane**
**London**
**EC2V 8AS (GB)**

(54) **Cycloolefin addition polymer and making method**

(57) A cycloolefin addition polymer is prepared by addition polymerization of a cycloolefin-functionalized siloxane and optionally norbornene in the presence of catalyst A which is a nickel or palladium complex having a cyclopentadienyl ligand and a methyl, triphenylphosphine or allyl ligand and co-catalyst B, typically tris(pentafluorophenyl)boron or trityltetra(pentafluorophenyl)borate. The polymer is easy to manufacture and has high thermal stability and mechanical strength as well as good gas permeability.

EP 2 213 691 A1

## Description

This invention relates to cycloolefin addition polymers, and more particularly, to cycloolefin addition polymers having organosiloxane pendants, and a method for preparing the same.

## BACKGROUND

In the modern world, air conditioners are essential in buildings, houses, automobiles and the like for presenting comfortable living and working spaces. Generally, air conditioners are installed in an environment which is closed for energy efficiency. As people continue working in such a closed space, the space is gradually depleted of oxygen to detract from working efficiency. Particularly in a passenger car, such oxygen depletion is soporific and likely to raise a safety problem. Open windows prevent a lowering of oxygen concentration, but lead to an energy loss and permit entry of pollen, sand, dust and debris, impairing the once established comfortable environment. Under the circumstances, oxygen enriching membranes for selective permeation of oxygen were developed for use in air conditioners. Their performance is still unsatisfactory.

One known oxygen permeable material is organopolysiloxane. However, the organopolysiloxane itself is low in mechanical strength and problematic on practical use. JP-B H04-001652 discloses copolymers of organopolysiloxane and polycarbonate and JP-A H05-285216 discloses polysiloxane-aromatic polyamide block copolymers. However, these copolymers are complex to synthesize and lack long-term stability because of hydrolysis.

Also proposed are various polymers substituted with organic silicon radicals, for example, silicon-containing styrene derivatives (JP-A H04-88004), silicon-containing stilbene derivatives (JP-A H08-198881), and silicon-containing celluloses (JP-A 2001-79375). None of them meet the requirements of oxygen permeability, thermal stability and mechanical strength.

JP-A 2007-291150 discloses polymers obtained from ring-opening polymerization of a cycloolefin compound having an organosiloxane pendant and hydrides thereof. However, most polymers are poor in heat resistance and film strength and lack long-term stability because of potential depolymerization.

## Citation List

Patent Document 1: JP-B H04-001652
Patent Document 2: JP-A H05-285216
Patent Document 3: JP-A H04-88004
Patent Document 4: JP-A H08-198881
Patent Document 5: JP-A 2001-79375
Patent Document 6: JP-A 2007-291150

An object of the invention is to provide a cycloolefin addition polymer which is easy to manufacture on an industrial scale and has both high thermal stability and mechanical strength as well as good gas permeability. Another object is to provide a method for preparing the same.

The inventors have found that a cycloolefin addition polymer is obtained from addition polymerization of a cycloolefin-functionalized siloxane having the formula (1) or a cycloolefin-functionalized siloxane having the formula (1) and a cycloolefin compound having the formula (2) in the presence of a catalyst A and a co-catalyst B. Specifically, structural units derived from the cycloolefin-functionalized siloxane having formula (1) are present in an amount of 35 to 100 mol% of the polymer. The polymer has a number average molecular weight (Mn) of 200,000 to 1,000,000 as measured by GPC versus polystyrene standards. The cycloolefin addition polymer of this specific structure has good properties of oxygen permeability, heat resistance and mechanical strength. The invention is predicated on this finding.

In one aspect, the invention provides a cycloolefin addition polymer obtained from addition polymerization of a cycloolefin-functionalized siloxane having the formula (1) and optionally a cycloolefin compound having the formula (2) in the presence of a catalyst A and a co-catalyst B, structural units derived from the cycloolefin-functionalized siloxane having formula (1) being present in an amount of 35 to 100 mol% of the polymer, the polymer having a number average molecular weight (Mn) of 200,000 to 1,000,000 as measured by GPC versus polystyrene standards.

The cycloolefin-functionalized siloxane has the formula (1):

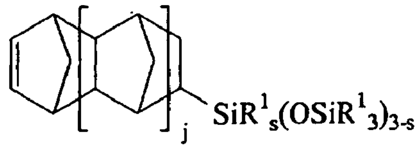

(1)

wherein $R^1$ is each independently a monovalent organic radical free of aliphatic unsaturation, s is an integer of 0 to 2, and j is 0 or 1.

The cycloolefin compound has the formula (2):

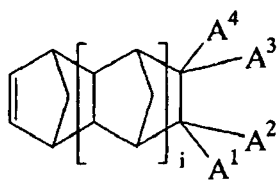

(2)

wherein $A^1$ to $A^4$ are each independently a substituent radical selected from the group consisting of hydrogen, halogen, $C_1$-$C_{10}$ alkyl, alkenyl, cycloalkyl, aryl, alkoxy, aryloxy and halogenated hydrocarbon radicals, or a polar substituent radical selected from the group consisting of oxetanyl and alkoxycarbonyl, or $A^1$ and $A^2$, or $A^1$ and $A^3$ may bond together to form an alicyclic structure, aromatic ring structure, carbonimide radical or acid anhydride radical with the carbon atom (s) to which they are attached, and i is 0 or 1.

Catalyst A is a transition metal complex in which at least a cyclopentadienyl ligand coordinates with a transition metal selected from nickel and palladium, having the formula (3):

$$ML_nK^1{}_xK^2{}_yK^3{}_z \qquad (3)$$

wherein M is nickel or palladium, L is a cyclopentadienyl ligand selected from cyclopentadienyl and derivatives thereof, $K^1$, $K^2$, and $K^3$ are different negative or neutral ligands, n is an integer of 1 to 3, x, y and z are each independently an integer of 0 to 7, x+y+z is an integer of 0 to 7.

Co-catalyst B is at least one compound selected from the group consisting of (a) an organoaluminum compound, (b) an ionic compound capable of reacting with catalyst A to form a cationic transition metal compound, and (c) a compound capable of promoting dissociation of the ligand from the complex as catalyst A.

In a preferred embodiment, structural units derived from the cycloolefin-functionalized siloxane having formula (1) are present in an amount of 40 to 95 mol% of the polymer, and structural units derived from the cycloolefin compound having formula (2) are present in an amount of 5 to 60 mol% of the polymer. Typically in formula (1), $R^1$ is methyl and s is 0, or $R^1$ is methyl and s is 1. Typically in formula (2), all $A^1$ to $A^4$ are hydrogen and i is 0. The polymer preferably has a polydispersity index (Mw/Mn) of 1.0 to 3.0 and also preferably a Tg of 200 to 400˚C.

Typically the polymer takes the form of a membrane, sheet or film.

In another aspect, the invention provides a method for preparing cycloolefin addition polymers defined above, comprising effecting addition polymerization of a cycloolefin-functionalized siloxane having the formula (1) and optionally a cycloolefin compound having the formula (2) in the presence of a catalyst A and a co-catalyst B. The cycloolefin-functionalized siloxane having formula (1), the cycloolefin having formula (2), catalyst A, and co-catalyst B are as defined above. Preferably the addition polymerization is effected in an inert gas atmosphere at a temperature of -20 to 100˚ C.

<u>ADVANTAGEOUS EFFECTS</u>

The cycloolefin polymer can be prepared by vinyl addition polymerization of cycloolefin in the presence of catalyst A and co-catalyst B. The polymer has good gas permeability, especially oxygen permeability, and possesses high thermal stability (or heat resistance) and film strength (or mechanical strength).

BRIEF DESCRIPTION OF DRAWINGS

FIG. 1 is a $^1$H-NMR chart of Polymer P-1 in Example 1.
FIG. 2 is a $^1$H-NMR chart of Polymer P-2 in Example 2.

FURTHER EXPLANATIONS; OPTIONS AND PREFERENCES

In this disclosure, the singular forms "a," "an" and "the" include plural referents unless the context clearly dictates otherwise. "Optional" or "optionally" means that the subsequently described event or circumstances may or may not occur, and that description includes instances where the event or circumstance occurs and instances where it does not. The notation (Cn-Cm) means a radical containing from n to m carbon atoms per radical. The abbreviation Me stands for methyl, and Ph stands for phenyl.

According to the invention, a polymer is obtained from addition polymerization of a cycloolefin-functionalized siloxane having the formula (1) and optionally a cycloolefin compound having the formula (2) in the presence of a catalyst A and a co-catalyst B.

The cycloolefin-functionalized siloxane has the formula (1):

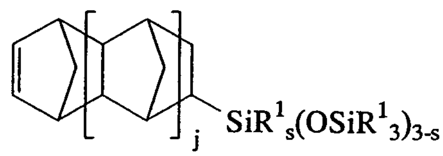

(1)

wherein $R^1$ which may be the same or different is a monovalent organic radical free of aliphatic unsaturation, s is an integer of 0 to 2, and j is 0 or 1.

The cycloolefin compound has the formula (2):

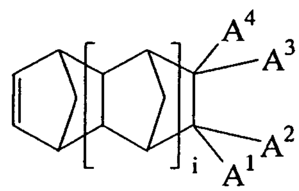

(2)

wherein $A^1$ to $A^4$ are each independently a substituent radical selected from the group consisting of hydrogen, halogen, $C_1$-$C_{10}$ alkyl, alkenyl, cycloalkyl, aryl, alkoxy, aryloxy and halogenated hydrocarbon radicals, or a polar substituent radical selected from the group consisting of oxetanyl and alkoxycarbonyl, or $A^1$ and $A^2$, or $A^1$ and $A^3$ may bond together to form an alicyclic structure, aromatic ring structure, carbonimide radical or acid anhydride radical with the carbon atom or atoms to which they are attached, and i is 0 or 1.

In formula (1), $R^1$ is each independently selected from monovalent organic radicals free of aliphatic unsaturation, preferably monovalent hydrocarbon radicals of 1 to 10 carbon atoms, for example, alkyl radicals such as methyl, ethyl, n-propyl, butyl and pentyl, aryl radicals such as phenyl, tolyl and xylyl, aralkyl radicals such as 2-phenylethyl and 3-phenylpropyl, and substituted forms of the foregoing in which one or more hydrogen atoms are substituted by halogen atoms such as fluorine, chlorine and bromine.

Examples of the cycloolefin-functionalized siloxane having formula (1) are given below, but not limited thereto.

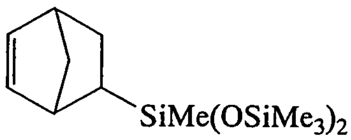
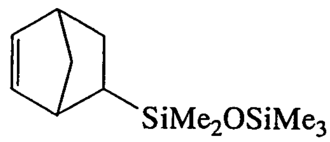
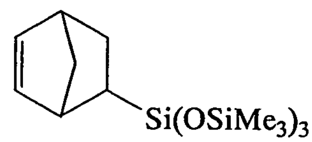

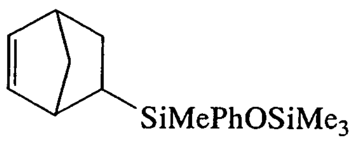
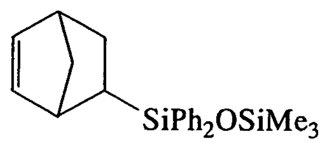
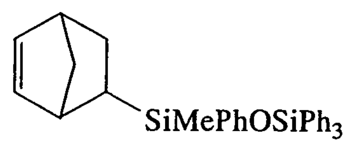

The cycloolefin-functionalized siloxanes having formula (1) may be used alone or in admixture of two or more.

The cycloolefin-functionalized siloxane having formula (1) may be prepared by any desired process. For example, the siloxane having formula (1) wherein $R^1$ is methyl, j=0, and s=0 may be prepared by the following processes.

In a first process, it may be synthesized by Diels-Alder reaction of an olefin-terminated siloxane with dicyclopentadiene according to the following reaction scheme.

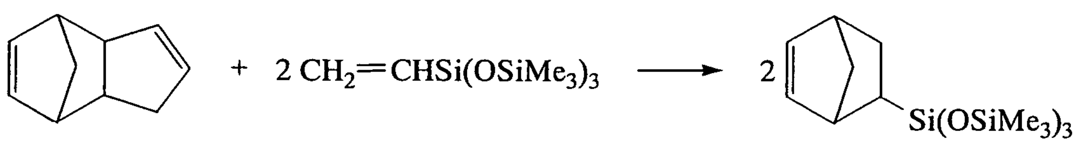

In a second process, it may be synthesized by addition reaction of norbornadiene and an SiH-containing functional siloxane in the presence of a platinum catalyst according to the following reaction scheme.

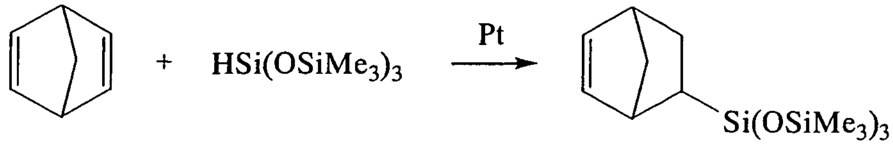


In formula (2), $A^1$ to $A^4$ are each independently a substituent radical selected from hydrogen, halogen atoms such as fluorine, chlorine and bromine, $C_1$-$C_{10}$, alkyl radicals such as methyl, ethyl, propyl, isopropyl, butyl, isobutyl, tert-butyl, pentyl, neopentyl, hexyl, octyl, nonyl and decyl, alkenyl radicals such as vinyl, allyl, butenyl and hexenyl, cycloalkyl radicals such as cyclohexyl, aryl radicals such as phenyl, tolyl, xylyl and naphthyl, alkoxy radicals such as methoxy, ethoxy and propoxy, aryloxy radicals such as phenoxy, and halogenated hydrocarbon radicals such as 3,3,3-trifluoropropyl, 2-(perfluorobutyl)ethyl, 2-(perfluorooctyl)ethyl and p-chlorophenyl, or a polar substituent radical selected from oxetanyl radicals and alkoxycarbonyl radicals whose alkoxy moiety preferably has 1 to 10 carbon atoms, especially 1 to 6 carbon atoms, such as methoxycarbonyl and tert-butoxycarbonyl. Alternatively, $A^1$ and $A^2$, or $A^1$ and $A^3$ may bond together to form an alicyclic structure, aromatic ring structure, carbonimide radical or acid anhydride radical with the carbon atom or atoms to which they are attached. The subscript i is 0 or 1.

In formula (2), the alicyclic structure is typically of 4 to 10 carbon atoms, and the aromatic ring structure is typically of 6 to 12 carbon atoms. Exemplary such structures are shown below.

alicyclic structure

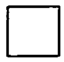

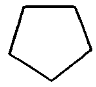

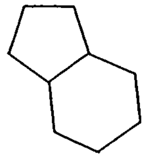

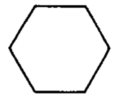

aromatic ring structure

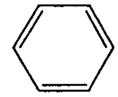

carbonimide

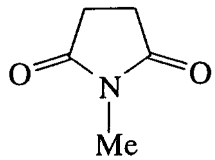

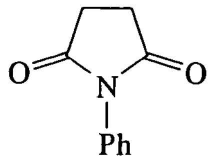

acid anhydride

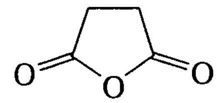

The linkages of these structures with norbornene ring are exemplified below. Note that these examples correspond to formula (2) wherein i=0; i=1 has analogous examples.

alicyclic structure

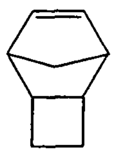

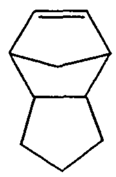

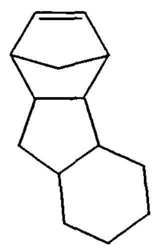

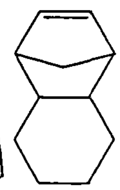

aromatic ring structure

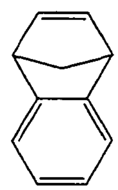

carbonimide

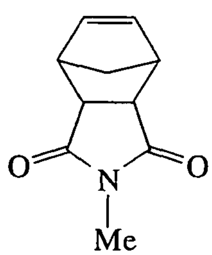

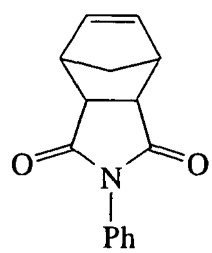

acid anhydride

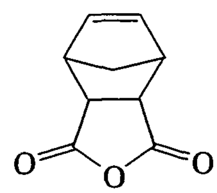

Examples of the cycloolefin compound having formula (2) include, but not limited to, bicyclo[2.2.1]hept-2-ene,

5-methyl-bicyclo[2.2.1]hept-2-ene,
5-ethyl-bicyclo[2.2.1]hept-2-ene,
5-propyl-bicyclo[2.2.1]hept-2-ene,
5-butyl-bicyclo[2.2.1]hept-2-ene,
5-pentyl-bicyclo[2.2.1]hept-2-ene,
5-hexyl-bicyclo[2.2.1]hept-2-ene,
5-octyl-bicyclo[2.2.1]hept-2-ene,
5-decyl-bicyclo[2.2.1]hept-2-ene,
5-phenyl-bicyclo[2.2.1]hept-2-ene,
5-vinyl-bicyclo[2.2.1]hept-2-ene,
5-allyl-bicyclo[2.2.1]hept-2-ene,
5-isopropylidene-bicyclo[2.2.1]hept-2-ene,
5-cyclohexyl-bicyclo[2.2.1]hept-2-ene,

5-fluoro-bicyclo[2.2.1]hept-2-ene,
5-chloro-bicyclo[2.2.1]hept-2-ene,
methyl bicyclo[2.2.1]hept-5-ene-2-carboxylate,
ethyl bicyclo[2.2.1]hept-5-ene-2-carboxylate,
butyl bicyclo[2.2.1]hept-5-ene-2-carboxylate,
methyl 2-methyl-bicyclo[2.2.1]hept-5-ene-2-carboxylate,
ethyl 2-methyl-bicyclo[2.2.1]hept-5-ene-2-carboxylate,
propyl 2-methyl-bicyclo[2.2.1]hept-5-ene-2-carboxylate,
trifluoroethyl 2-methyl-bicyclo[2.2.1]hept-5-ene-2-carboxylate,
ethyl 2-methyl-bicyclo[2.2.1]hept-2-enylacetate,
2-methyl-bicyclo[2.2.1]hept-5-enyl acrylate,
2-methyl-bicyclo[2.2.1]hept-5-enyl methacrylate,
dimethyl bicyclo[2.2.1]hept-5-ene-2,3-dicarboxylate, tricyclo [4.3.0.$1^{2,5}$] dec-3-ene, and
tetracyclo[4.4.0.$1^{2,5}$.$1^{7,10}$]dodec-3-ene. These cycloolefin compounds may be used alone or in combination of two or more.

It is preferred from the standpoints of heat resistance and oxidative degradability of the polymer that the cycloolefin compound having formula (2) do not contain an unsaturated bond in its structure. Therefore, when addition polymerization is conducted using an unsaturated bond-containing compound such as 5-vinyl-bicyclo[2.2.1]hept-2-ene, the carbon-carbon double bond on a side chain of the resulting polymer is preferably hydrogenated or hydrosilylated. This is because the polymer is then improved in heat resistance and oxidative degradability.

Notably, the cycloolefin compound having formula (2) having a polar radical such as ester has a tendency that the resulting polymer enhances its adhesion to substrates and solubility in organic solvents, but loses its gas permeability. Depending on a particular purpose, an artisan may determine whether or not the cycloolefin compound contains a polar radical.

The relative proportions of the functionalized siloxane having formula (1) and the cycloolefin having formula (2) influence the gas permeability. They can be determined in accordance with the desired properties. Preferably structural units derived from the siloxane having formula (1) are present in an amount of 35 to 100 mol%, more preferably 40 to 100 mol% of the polymer. The polymer may consist of structural units derived from (1) and (2).
More preferably, structural units derived from formula (1) are present in an amount of 40 to 95 mol%, the structural units derived from formula (2) are present in an amount of 5 to 60 mol% of the polymer.

As described above, the cycloolefin addition polymer of the invention is prepared by addition polymerization of a cycloolefin-functionalized siloxane having formula (1) and a cycloolefin compound having formula (2) in the presence of catalyst A and co-catalyst B. Prior art catalysts known for addition polymerization of cycloolefin compounds include transition metal complexes having a center metal selected from the elements of Groups 8, 9, and 10 in the Periodic Table, for example, iron (Fe), cobalt (Co), nickel (Ni), ruthenium (Ru), rhodium (Rh), palladium (Pd), and platinum (Pt). However, in order to produce a cycloolefin addition polymer having the desired physical properties, the catalyst must be able to enhance the reactivity of the cycloolefin-functionalized siloxane having formula (1) and act such that the resulting polymer may have a fully high molecular weight. In this regard, catalyst A having a center metal of nickel or palladium and a specific ligand as represented by formula (3) must be used in combination with co-catalyst B.

<u>Catalyst A</u>

Catalyst A is a transition metal complex in which at least a cyclopentadienyl ligand coordinates with a transition metal selected from nickel and palladium belonging to Group 10 in the Periodic Table. The complex has the formula (3).

$$ML_nK^1_xK^2_yK^3_z \qquad (3)$$

Herein M is nickel or palladium. L is a cyclopentadienyl ligand selected from cyclopentadienyl and derivatives thereof. Suitable cyclopentadienyl derivatives represented by L include substituted forms of cyclopentadienyl in which hydrogen is substituted by a substituent radical to be described below, indenyl and fluorenyl. Also included in the cyclopentadienyl derivatives are indenyl and fluorenyl derivatives in which hydrogen is substituted by a substituent radical to be described below.

For the substituted forms of cyclopentadienyl, examples of the substituent radical include $C_1$-$C_{20}$ hydrocarbon radicals such as methyl, ethyl, n-propyl, isopropyl, n-butyl, t-butyl, phenyl, benzyl, and neopentyl, and hydrocarbon-substituted silyl radicals such as trimethylsilyl.

For the substituted forms of cyclopentadienyl, other suitable substituent radicals include radicals having heteroatoms such as oxygen, nitrogen, sulfur, phosphorus and halogen (e.g., F, Cl, B) atoms and exhibiting polarity. Examples are RO, RCO, ROCO, RCOO, $R_2N$, $R_2NCO$, NC, RS, RCS, RSO, and $R_2S$ radicals wherein R is a $C_1$-$C_{12}$

hydrocarbon radical. Where more than one R is present, they may be the same or different. Examples of R include alkyl radicals such as methyl, ethyl, n-propyl, isopropyl, n-butyl, t-butyl, hexyl, and octyl, aryl radicals such as phenyl, and aralkyl radicals such as benzyl, with $C_1$-$C_4$ alkyl radicals being most preferred.

For the substituted forms of cyclopentadienyl, still other substituent radicals include methoxy, ethoxy, t-butoxy, acetyl, propionyl, dimethylamino, diethylamino, nitrile, dimethylaminocarbonyl, and diethylaminocarbonyl. Similar substituent radicals are applicable to the substituted forms of indenyl and fluorenyl.

Preferred examples of L are cyclopentadienyl, cyclopentadienyl having 1 to 5 methyl radicals, phenylcyclopentadienyl, benzylcyclopentadienyl, and indenyl.

$K^1$, $K^2$, and $K^3$ are different negative or neutral ligands. Exemplary negative ligands of $K^1$, $K^2$, and $K^3$ include hydrogen atoms; oxygen atoms; halogen atoms such as fluorine, chlorine, bromine and iodine atoms; straight or branched $C_1$-$C_{20}$ alkyl radicals such as methyl, ethyl, n-propyl, isopropyl, n-butyl, t-butyl, isobutyl, octyl and 2-ethylhexyl; $C_6$-$C_{20}$ aryl, alkylaryl and arylalkyl radicals such as phenyl, tolyl, xylyl and benzyl; hydroxyl; $C_1$-$C_{20}$ alkoxy radicals such as methoxy, ethoxy, propoxy and butoxy; $C_6$-$C_{20}$ aryloxy radicals such as phenoxy, methylphenoxy, 2,6-dimethylphenoxy and naphthyloxy; dialkylamino, diarylamino and alkylarylamino radicals in which the alkyl moiety is $C_1$-$C_{20}$ alkyl, such as dimethylamino, diethylamino, di(n-propyl)amino, di(isopropyl)amino, di(n-butyl)amino, di(t-butyl)amino, di(isobutyl) amino, diphenylamino, and methylphenylamino; $\pi$-allyl; $C_3$-$C_{20}$ substituted allyl radicals; acetylacetonato radicals; $C_5$-$C_{20}$ substituted acetylacetonato radicals; hydrocarbon-substituted silyl radicals such as trimethylsilyl; carbonyl; and carboxyl.

Exemplary neutral ligands of $K^1$, $K^2$, and $K^3$ include an oxygen molecule; nitrogen molecule; ethylene; ethers such as diethyl ether and tetrahydrofuran; nitriles such as acetonitrile and benzonitrile; esters such as ethyl benzoate; amines such as triethylamine, 2,2'-bipyridine and phenanthroline; trialkylphosphines such as trimethylphosphine and triethylphosphine; triarylphosphines such as triphenylphosphine; silicon-substituted hydrocarbon radicals such as (trimethylsilyl)methyl; Lewis bases such as sulfoxides, isocyanides, phosphonic acids and thiocyanates; aromatic hydrocarbons such as benzene, toluene and xylene; and cyclic unsaturated hydrocarbons such as cycloheptatriene, cyclooctadiene, cyclooctatriene, cyclooctatetraene, and derivatives thereof.

With respect to $K^1$, $K^2$, and $K^3$ in formula (3), it is acceptable that all be negative ligands, or all be neutral ligands, or some be negative ligands and the remaining be neutral ligands.

In formula (3), n is an integer of 1 to 3, x, y and z are each independently an integer of 0 to 7, and the sum of x+y+z is an integer of 0 to 7.

Examples of catalyst A having formula (3) include
cyclopentadienyl(methyl)(triphenylphosphine)nickel,
methylcyclopentadienyl(methyl)(triphenylphosphine)nickel,
pentamethylcyclopentadienyl(methyl)(triphenylphosphine)nickel,
indenyl(methyl)(triphenylphosphine)nickel,
fluorenyl(methyl)(triphenylphosphine)nickel,
cyclopentadienyl(methyl)(tricyclohexylphosphine)nickel,
pentamethylcyclopentadienyl(methyl)(tricyclohexylphosphine)-nickel,
indenyl(methyl)(tricyclohexylphosphine)nickel,
fluorenyl(methyl)(tricyclohexylphosphine)nickel,
cyclopentadienyl($\pi$-allyl)palladium,
methylcyclopentadienyl($\pi$-allyl)palladium,
pentamethylcyclopentadienyl($\pi$-allyl)palladium,
indenyl($\pi$-allyl)palladium, fluorenyl($\pi$-allyl)palladium, and
cyclopentadienyl($\pi$-allyl)(tricyclohexylphosphine)palladium.

The transition metal complex having formula (3) may be prepared by the method described in H. Yamazaki et al., Bull. Chem. Soc. Jpn., 1964, 37, 907.

Co-catalyst B

The co-catalyst B used herein is at least one compound selected from (a) an organoaluminum compound, (b) an ionic compound capable of reacting with catalyst A to form a cationic transition metal compound, and (c) a compound capable of promoting dissociation of the ligand from the complex as catalyst A. These compounds may be used alone or in combination of two or more.

(a) Organoaluminum compound

The organoaluminum compounds are aluminum compounds having hydrocarbon radicals, examples of which include organoaluminum compounds, halogenated organoaluminum compounds, hydrogenated organoaluminum compounds, and organoaluminum oxy compounds.

Suitable organoaluminum compounds include trimethylaluminum, triethylaluminum, triisobutylaluminum, trihexylaluminum, and trioctylaluminum. Suitable halogenated organoaluminum compounds include dimethylaluminum chloride, diethylaluminum chloride, sesquiethylaluminum chloride, and ethylaluminum dichloride. Suitable hydrogenated organoaluminum compounds include diethylaluminum hydride and sesquiethylaluminum hydride. The organoaluminum oxy compounds, which are also referred to as aluminoxane, are linear or cyclic polymers having the following general formula.

$$-(Al(R')O)_k-$$

Herein R' is selected from $C_1$-$C_{10}$ hydrocarbon radicals and substituted $C_1$-$C_{10}$ hydrocarbon radicals in which some hydrogen atoms are substituted by halogen atoms (e.g., fluorine, chlorine, bromine) and/or R'O radicals. R' is preferably methyl, ethyl, propyl or isobutyl. The subscript k indicative of a degree of polymerization is at least 5, preferably at least 10.

Of the organoaluminum compounds (a), halogenated organoaluminum compounds and organoaluminum oxy compounds are preferred. Inter alia, diethylaluminum chloride, sesquiethylaluminum chloride, methylaluminoxane, ethylaluminoxane, and ethylchloroaluminoxane are more preferred.

(b) Ionic compound

The ionic compound capable of reacting with catalyst A to form a cationic complex include ionic compounds having non-coordinative anions combined with cations, as shown below.

Suitable non-coordinative anions include tetra(phenyl)borate, tetra(fluorophenyl)borate,
tetrakis(difluorophenyl)borate,
tetrakis(trifluorophenyl)borate,
tetrakis(tetrafluorophenyl)borate,
tetrakis(pentafluorophenyl)borate,
tetrakis(tetrafluoromethylphenyl)borate, tetra(triyl)borate,
tetra(xylyl)borate, (triphenyl, pentafluorophenyl)borate,
[tris(pentafluorophenyl), phenyl]borate, and
7,8-dicarbaundecaborate tridecahydride.

Suitable cations include carbonium, oxonium, ammonium, phosphonium, cycloheptyltrienyl cations, ferrocenium cations having a transition metal, and alkyl-substituted (typically methyl-substituted) ferrocenium cations.

Exemplary carbonium cations include triphenylcarbonium cations and tri-substituted carbonium cations such as tri(substituted phenyl)carbonium cations, e.g., tri(methylphenyl)carbonium and tri(dimethylphenyl)carbonium cations.

Exemplary ammonium cations include trialkylammonium cations such as trimethylammonium, triethylammonium, tripropylammonium, tributylammonium, and tri(n-butyl)ammonium, N,N-dialkylanilinium cations such as N,N-dimethylanilinium, N,N-diethylanilinium, and N,N-2,4,6-pentamethylanilinium, and dialkylammonium cations such as di(isopropyl)ammonium and dicyclohexylammonium.

Exemplary phosphonium cations include triarylphosphonium cations such as triphenylphosphonium, tri(methylphenyl)phosphonium, and tri(dimethylphenyl)phosphonium.

Preferred examples of the ionic compound (b) include trityltetra(pentafluorophenyl)borate, triphenylcarbonium tetra(fluorophenyl)borate, N,N-dimethylanilinium tetra(pentafluorophenyl)borate, and 1,1'-dimethylferrocenium tetra(pentafluorophenyl)borate.

(c) Dissociation promoting compound

Examples of the compound capable of promoting dissociation of the ligand from the complex as catalyst A include tris(pentafluorophenyl)boron, tris(monofluorophenyl)boron, tris(difluorophenyl)boron, triphenylboron, and bis(cyclooctadiene)nickel.

In the practice of the invention, each of catalyst A and co-catalyst B may be used alone or in combination of two or more. In one preferred embodiment, cycloolefin addition polymers or norbornene polymers are prepared using a complex having formula (3) wherein M is nickel (Ni) or palladium (Pd), L is cyclopentadienyl or indenyl, and other ligands are methyl ($CH_3$-) and triphenylphosphine ($PPh_3$), chlorine (Cl) and $PPh_3$, or allyl ($C_3H_5$-), as catalyst A and tris(pentafluorophenyl)boron ($[B(C_6F_5)_3]$)' trityltetra(pentafluorophenyl)borate ($[Ph_3C][B(C_6F_5)_4]$) or methylaminoxane (MAO) as co-catalyst B.

In a more preferred embodiment, cycloolefin addition polymers or norbornene polymers are prepared using a complex having formula (3) wherein M is nickel (Ni) or palladium (Pd), L is cyclopentadienyl, and other ligands are methyl ($CH_3$-) and triphenylphosphine ($PPh_3$) or allyl ($C_3H_5$-), as catalyst A and tris(pentafluorophenyl)boron ($[B(C_6F_5)_3]$) or trityltetra(pentafluorophenyl)borate ($[Ph_3C][B(C_6F_5)_4]$) as co-catalyst B.

Amounts of catalyst A and co-catalyst B used are in the following ranges. Catalyst A is preferably used in an amount of 0.01 to 100 mmol atom, more preferably 0.05 to 10 mmol atom per mole of the monomers having formulae (1) and (2) combined. Co-catalyst B is preferably used in an amount of 0.5 to 10,000 moles, more preferably 1 to 1,000 moles per mole of catalyst A.

Cycloolefin addition polymers may be prepared by polymerizing the monomers in a solvent in the presence of catalyst A and co-catalyst B. Examples of the solvent include alicyclic hydrocarbon solvents such as cyclohexane and cyclopentane, aliphatic hydrocarbon solvents such as hexane and octane, aromatic hydrocarbon solvents such as toluene, benzene and xylene, halogenated hydrocarbon solvents such as dichloromethane, tetrachloroethylene and chlorobenzene, and cyclic polysiloxane solvents such as octamethylcyclotetrasiloxane and decamethylcyclopentasiloxane, which may be used alone or in admixture of two or more. The solvent is preferably used such amounts that a weight ratio (S/M) of the solvent S to the cycloolefin monomer M (monomers having formulae (1) and (2) combined) is in the range between 1 and 30, more preferably between 1 and 20. If the amount of solvent is below the range of weight ratio S/M, the monomer solution may have a high viscosity and be difficult to handle. A weight ratio S/M beyond the range may adversely affect polymerization activity.

Polymerization is preferably carried out by feeding the solvent, the cycloolefin monomers having formulae (1) and (2), catalyst A, and co-catalyst B to a reactor in an inert gas atmosphere such as nitrogen or argon, and holing the reactor at a temperature of -20 to 100˚C, especially 0 to 80˚C, for 1 to 72 hours, especially 2 to 48 hours for reaction to take place. Outside the range, lower reaction temperatures may adversely affect polymerization activity whereas higher reaction temperatures may cause gelation or make it difficult to modify the molecular weight.

If desired, a molecular weight modifier may be added to the polymerization system. Suitable molecular weight modifiers include hydrogen, $\alpha$-olefins such as ethylene, butene and hexene, aromatic vinyl compounds such as styrene, 3-methylstyrene and divinylbenzene, and vinyl silicon compounds such as tris(trimethylmethoxy)vinylsilane, divinyldihydrosilane, and vinylcyclotetrasiloxane.

Since the above-mentioned factors including a solvent/monomer ratio, polymerization temperature, polymerization time, and an amount of molecular weight modifier largely depend on the catalyst, the structure of monomers and the like, it is difficult to determine these factors unequivocally. These factors may be determined as appropriate for a particular purpose so as to provide the polymer with a specific structure. Most often, the molecular weight of a polymer is adjusted in accordance with the amount of polymerization catalyst and the amount of molecular weight modifier added, the percent conversion from monomer to polymer, or the polymerization temperature.

Polymerization may be stopped by adding a compound selected from water, alcohols, ketones, and organic acids. A mixture of an acid (e.g., lactic acid, malic acid or oxalic acid), water and an alcohol is added to the polymerization solution, after which the catalyst residues may be separated or removed from the polymerization solution. For removal of the catalyst residues, adsorption removal using such an adsorbent as activated carbon, diatomaceous earth, alumina or silica or filtration removal by a filter or the like is also applicable.

The polymer may be recovered by pouring the polymer solution to an alcohol (e.g., methanol or ethanol) or a ketone (e.g., acetone or methyl ethyl ketone), causing the polymer to coagulate, and vacuum drying at 60 to 150˚C for 6 to 48 hours. In the course of recovery, the catalyst residues and unreacted monomers remaining in the polymer solution are also removed. Also, the unreacted siloxane-bearing monomer may be readily removed using a mixture of the alcohol or ketone and a cyclic polysiloxane such as octamethylcyclotetrasiloxane or decamethylcyclopentasiloxane.

The cycloolefin addition polymer thus obtained comprises recurring units of the formula (4) resulting from addition polymerization of the cycloolefin-functionalized siloxane having formula (1) as a monomer.

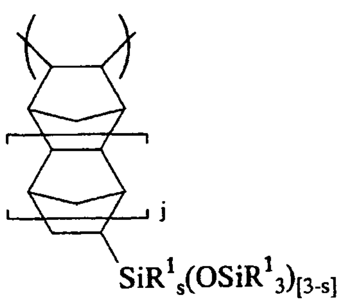

(4)

Herein $R^1$, s and j are as defined in formula (1).

The cycloolefin addition polymer may further comprise recurring units of the formula (5) resulting from addition polymerization of the cycloolefin compound having formula (2) as an additional monomer.

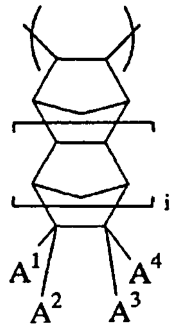

(5)

Herein $A^1$ to $A^4$ and i are as defined in formula (2).

Although the recurring units of formula (5) represent 2,3-addition structural units when all $A^1$ to $A^4$ are hydrogen and i=0, they may further include 2,7-addition structural units resulting from addition polymerization of a cycloolefin of formula (2) as a monomer. This is also true to the recurring units of formula (4).

In the cycloolefin addition polymer, structural units of formula (4) are generally incorporated in a proportion of 35 to 100 mol%, preferably 40 to 100 mol%. A polymer containing less than 35 mol% of structural units of formula (4) may be less gas permeable. From the standpoints of gas permeability, solubility in organic solvent, and mechanical strength, the polymer preferably comprises 40 to 95 mol% of structural units derived from formula (1) and 5 to 60 mol% of structural units derived from formula (2).

In the cycloolefin addition polymer, structural units of formulae (4) and (5) may be arrayed randomly or localized in blocks.

The molecular weight of the cycloolefin addition polymer is an important factor dictating the development of good physical properties. The polymer should have a number average molecular weight (Mn) of 200,000 to 1,000,000, preferably 250,000 to 900,000, as measured by gel permeation chromatography (GPC) versus polystyrene standards. The polymer should preferably have a polydispersity index (Mw/Mn) of 1.0 to 3.0, more preferably 1.0 to 2.5, as given by weight average molecular weight (Mw) divided by number average molecular weight (Mn), measured by GPC versus polystyrene standards. A polymer with Mn of less than 200,000 is formed into a membrane, film or sheet which may be brittle and liable to break, failing to gain a practically acceptable film strength. A polymer with Mn of more than 1,000,000 may be less moldable and less soluble in solvents, and form a solution having too high a viscosity to handle. If the polydispersity index (Mw/Mn) is in excess of 3.0, the polymer may become fragile and brittle. The presence of catalyst A and co-catalyst B in the polymerization system ensures to produce a cycloolefin addition polymer having a Mn of 200,000 to 1,000,000 and a polydispersity index (Mw/Mn) of 1.0 to 3.0, that is, a narrow molecular weight distribution. The polymer is formed into a membrane, film or sheet which is devoid of fragile and brittle problems.

The cycloolefin addition polymer should preferably have a glass transition temperature (Tg) of 200 to 400˚C, more preferably 220 to 380˚C, as measured by thermal mechanical analysis (TMA). A polymer with a Tg of lower than 200˚C may be undesirably heat deformable during molding of the polymer or during service of the molded polymer. A polymer with a Tg of higher than 400˚C must be heat processed at a high temperature which may cause thermal degradation to the molded polymer.

The structure of the cycloolefin addition polymer may be confirmed by nuclear magnetic resonance spectroscopy (specifically, $^1$H-NMR or $^{29}$Si-NMR). The structure can be confirmed from absorption peaks and integral ratios thereof, and such peaks include, in the case of $^1$H-NMR (in deuterated chloroform), absorption assigned to $-C_6H_5$ of -O-Si($C_6H_5$)-O- at 7.8 to 6.5 ppm, absorption assigned to alicyclic hydrocarbon at 0.6 to 3.0 ppm, absorption assigned to -Si-$CH_2$-, -Si-$CH_3$ and -O-Si-$CH_3$ at 0.0 to 0.6 ppm, and absorption assigned to -O-Si($CH_3$)-O- at -0.1 to 0.0 ppm; and in the case of $^{29}$Si -NMR (in deuterated benzene), absorption assigned to M unit ($R^3$: methyl at 10.0 to 5.0 ppm), absorption assigned to D unit ($R^3$: methyl at -15.0 to -25.0 ppm, $R^3$: phenyl, -45.0 to -50.0 ppm), and absorption assigned to T unit ($R^3$: alkyl at -65.0 to -70.0 ppm), as shown in formula (6) below.

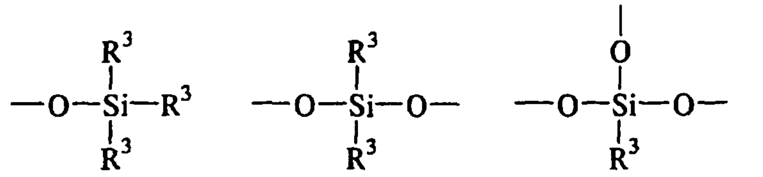

(6)

M unit D unit T unit

Note that $R^3$ in formula (6) is the same as $R^1$ in formula (1).

Advantageously the cycloolefin addition polymer is used in the form of a membrane, sheet or film. Although the thickness of membrane, sheet or film is not particularly limited, the thickness is generally selected in the range of 10 nm to 3 mm in accordance with a particular purpose. The polymer may be formed into a membrane, sheet or film by any desired methods. The methods preferred for suppressing degradation of the polymer by thermal hysteresis include a solution casting method involving dissolving the polymer in a suitable solvent, applying the solution to a support, and evaporating off the solvent to dry the coating, and a water surface spreading method involving adding dropwise a polymer solution to the surface of water so that the polymer spreads to form a film and transferring the film to a support.

The solvents used in the solution casting and water surface spreading methods are those in which the addition polymer is dissolvable. Suitable solvents include aliphatic hydrocarbon solvents such as cyclopentane, hexane, cyclohexane and decane, aromatic hydrocarbon solvents such as toluene, xylene and ethylbenzene, halogenated hydrocarbon solvents such as dichloromethane and chloroform, and polysiloxane solvents such as hexamethyldisiloxane, methyltris(trimethylsiloxy)silane, and decamethylcyclopentasiloxane, which may be used alone or in admixture, because most addition polymers are dissolvable therein. Although the cycloolefin addition polymers are fully soluble in these solvents, it sometimes becomes difficult to remove the residual solvent upon drying, depending on the film thickness and coating conditions. For this reason, those solvents having a relatively low boiling point, specifically solvents based on hexane, cyclohexane, toluene or the like are preferred. When influence on the human body and environment load are taken into account, those solvents based on safer polysiloxane solvents such as methyltris(trimethylsiloxy)silane and decamethylcyclopentasiloxane are preferred.

In the solution of the cycloolefin addition polymer, any well-known antioxidants may be contained for improving oxidation stability. Suitable antioxidants used herein include phenols and hydroquinones such as 2,6-di-t-butyl-4-methylphenol, 4,4'-thiobis(6-t-butyl-3-methylphenol), 1,1'-bis(4-hydroxyphenyl)cyclohexane, 2,5-di-t-butylhydroquinone, and pentaerythrityl tetrakis[3-(3,5-di-t-butyl-4-hydroxyphenyl)]-propionate; phosphorus compounds such as tris(4-methoxy-3,5-diphenyl)phosphite, tris(nonylphenyl)phosphite, tris(2,4-di-t-butylphenyl)phosphite, and bis(2,4-di-t-butylphenyl) pentaerythritol diphosphite; thioether and lactone compounds. Of these, those having a decomposition temperature (temperature providing a 5% weight loss) of at least 250°C are preferred. The antioxidant may be used in an amount of 0.05 to 5.0 parts by weight per 100 parts by weight of the cycloolefin addition polymer.

## EXAMPLE

Examples and Comparative Examples are given below by way of illustration and not by way of limitation. Herein, Me is methyl, Ph is phenyl, and Cy is cyclohexyl.

Polymers were analyzed for molecular weight and molecular weight distribution, monomer compositional ratio, solubility, glass transition temperature, breaking strength, elongation at break, and oxygen transmission rate by the following methods.

1) The weight average molecular weight (Mw), number average molecular weight (Mn) and molecular weight distribution (polydispersity index, Mw/Mn) of a polymer were determined by gel permeation chromatography (GPC) versus polystyrene standards.

2) The compositional ratio of norbornene/norbornene derivative in a copolymer is computed from an integral ratio of peaks in $^1$H-NMR.

3) The solubility of a polymer in an organic solvent was evaluated as a 10% by weight solution. The solvents tested were toluene, decane, hexane, dichloromethane, hexamethyldisiloxane (designated $M_2$), methyltris(trimethylsiloxy) silane (designated $M_3T$), and decamethylcyclopentasiloxane (designated $D_5$).

4) The glass transition temperature (Tg) of a polymer was measured by using a TMA analyzer, attaching a film sample of 100 to 200 μm thick, 3 mm wide, and 20 mm long to the probe, and heating from room temperature at a rate of 10° C/min.

5) Breaking strength and elongation at break were measured by punching a film of 100 to 200 μm thick into No. 2 dumbbell specimen, mounting the specimen to a tensile tester, and pulling the sample at a rate of 50 mm/min.

6) Oxygen transmission rate was measured by the isotactic method using a disk sample of 50 to 100 μm thick and 10 cm in diameter.

Example 1

A nitrogen-purged glass reactor was charged with 30.0 g (0.077 mol) of Monomer A having formula (7), 9.4 g (0.100 mol) of Monomer B (norbornene) having formula (8), and 37 mg (40 μmol) of trityltetra(pentafluorophenyl)borate ($[Ph_3C][B(C_6F_5)_4]$), which were dissolved in 140 ml of toluene. A catalyst solution which was separately prepared by dissolving 9 mg (40 μmol) of cyclopentadienyl(allyl)palladium ($C_5H_5PdC_3H_5$) and 12 mg (40 μmol) of tricyclohexylphosphine ($PCy_3$) in 15 ml of toluene was added to the reactor where polymerization reaction took place at room temperature (25°C) for 3 hours.

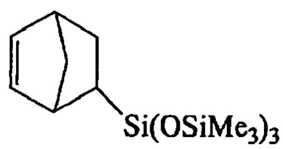

(7)

Monomer A

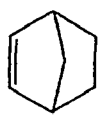

(8)

Monomer B

After the completion of reaction, the reaction solution was poured to a large volume of methanol for precipitation. This was followed by filtration, washing and vacuum drying at 60°C for 5 hours, obtaining 28.5 g (yield 72%) of Polymer P-1.

Polymer P-1 had Mn = 778,100 and Mw/Mn = 1.53 as measured by GPC. On $^1$H-MMR analysis as shown in FIG. 1, the polymer was found to contain structural units derived from Monomer A and structural units derived from Monomer B in a compositional ratio A/B = 43/57 (mol/mol). Polymer P-1 was dissolved in toluene to form a 10% by weight polymer solution. Using the solution casting method, the polymer solution was cast and dried at 60°C for 24 hours to form a polymer film F-1.

Example 2

A nitrogen-purged glass reactor was charged with 44.8 g (0.115 mol) of Monomer A having formula (7), 5.8 g (0.062 mol) of Monomer B (norbornene) having formula (8), and 37 mg (40 μmol) of trityltetra(pentafluorophenyl)borate ($[Ph_3C][B(C_6F_5)_4]$), which were dissolved in 140 ml of toluene. A catalyst solution which was separately prepared by dissolving 9 mg (40 μmol) of cyclopentadienyl(allyl)palladium ($C_5H_5PdC_3H_5$) and 12 mg (40 μmol) of tricyclohexylphosphine ($PCy_3$) in 15 ml of toluene was added to the reactor where polymerization reaction took place at room temperature (25°C) for 5 hours.

After the completion of reaction, the reaction solution was poured to a large volume of methanol for precipitation. This was followed by filtration, washing and vacuum drying at 60°C for 5 hours, obtaining 31.8 g (yield 63%) of Polymer P-2.

Polymer P-2 had Mn = 601,300 and Mw/Mn = 1.49 as measured by GPC. On $^1$H-NMR analysis as shown in FIG. 2, the polymer was found to contain structural units derived from Monomer A and structural units derived from Monomer B in a compositional ratio A/B = 67/33 (mol/mol). Polymer P-2 was dissolved in toluene to form a 10% by weight polymer solution. Using the solution casting method, the polymer solution was cast and dried at 60°C for 24 hours to form a polymer film F-2.

Example 3

The procedure of Example 1 was repeated aside from using 30.2 g (0.100 mol) of Monomer C having formula (9) instead of Monomer A. There was obtained 24.0 g (yield 61%) of Polymer P-3.

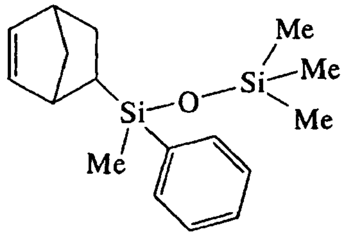

(9)

Monomer C

Polymer P-3 had Mn = 735,800 and Mw/Mn = 1.24 as measured by GPC. The polymer was found to contain structural units derived from Monomer C and structural units derived from Monomer B in a compositional ratio C/B = 50/50 (mol/mol). Polymer P-3 was dissolved in toluene to form a 10% by weight polymer solution. Using the solution casting method, the polymer solution was cast and dried at 60˚C for 24 hours to form a polymer film F-3.

Comparative Example 1

A nitrogen-purged glass reactor was charged with 7.0 g (0.018 mol) of Monomer A having formula (7) and 14.9 g (0.159 mol) of Monomer B (norbornene) having formula (8), which were dissolved in 240 ml of toluene. A catalyst solution which was separately prepared by dissolving 23 mg (89 μmol) of bis(acetylacetate)nickel ($Ni[acac]_2$) and 228 mg (445 μmol) of tris(pentafluorophenyl)boron ($B(C_6F_5)_3$) in-15 ml of toluene was added to the reactor where polymerization reaction took place at room temperature (25˚C) for 1 hour.

After the completion of reaction, the reaction solution was poured to a large volume of methanol for precipitation. This was followed by filtration, washing and vacuum drying at 60˚C for 5 hours, obtaining 15.5 g (yield 71%) of Polymer P-4.

Polymer P-4 had Mn = 313,000 and Mw/Mn = 2.07 as measured by GPC. On $^1$H-NMR analysis, the polymer was found to contain structural units derived from Monomer A and structural units derived from Monomer B in a compositional ratio A/B = 7/93 (mol/mol). Polymer P-4 was dissolved in toluene to form a 10% by weight polymer solution. Using the solution casting method, the polymer solution was cast and dried at 60˚C for 24 hours to form a polymer film F-4.

Comparative Example 2

A nitrogen-purged glass reactor was charged with 30.0 g (0.077 mol) of Monomer A having formula (7) and 9.4 g (0.100 mol) of Monomer B (norbornene) having formula (8), which were dissolved in 240 ml of toluene. A catalyst solution which was separately prepared by dissolving 23 mg (89 μmol) of bis(acetylacetate)nickel ($Ni[acac]_2$) and 228 mg (445 μmol) of tris(pentafluorophenyl)boron ($B(C_6F_5)]$) in 15 ml of toluene was added to the reactor where polymerization reaction took place at 50˚C for 24 hours.

After the completion of reaction, the reaction solution was poured to a large volume of methanol for precipitation. This was followed by filtration, washing and vacuum drying at 60˚C for 5 hours, obtaining 19.7 g (yield 50%) of Polymer P-5.

Polymer P-5 had Mn = 52,100 and Mw/Mn = 2.45 as measured by GPC. On $^1$H-NMR analysis, the polymer was found to contain structural units derived from Monomer A and structural units derived from Monomer B in a compositional ratio A/B = 46/53 (mol/mol). Polymer P-5 was dissolved in toluene to form a 10% by weight polymer solution. Using the solution casting method, the polymer solution was cast to form a polymer film F-5 which was too brittle to evaluate.

Comparative Example 3

A nitrogen-purged glass reactor was charged with 7.0 g (0.018 mol) of Monomer C having formula (9) and 14.9 g (0.159 mol) of Monomer B (norbornene) having formula (8), which were dissolved in 240 ml of toluene. A catalyst solution which was separately prepared by dissolving 23 mg (89 μmol) of bis(acetylacetate)nickel ($Ni[acac]_2$) and 228 mg (445 μmol) of tris(pentafluorophenyl)boron ($B(C_6F_5)_3$) in 15 ml of toluene was added to the reactor where polymerization reaction took place at room temperature (25˚C) for 2 hours.

After the completion of reaction, the reaction solution was poured to a large volume of methanol for precipitation.

This was followed by filtration, washing and vacuum drying at 60˚C for 5 hours, obtaining 9.2 g (yield 42%) of Polymer P-6.

Polymer P-6 had Mn = 234,000 and Mw/Mn = 2.26 as measured by GPC. On $^1$H-NMR analysis, the polymer was found to contain structural units derived from Monomer C and structural units derived from Monomer B in a compositional ratio C/B = 7/93 (mol/mol). Polymer P-6 was dissolved in toluene to form a 10% by weight polymer solution. Using the solution casting method, the polymer solution was cast and dried at 60˚C for 24 hours to form a polymer film F-6.

Table 1 reports the yield, composition, Mn, and Mw/Mn of Polymers P-1 to P-6 obtained in Examples 1 to 3 and Comparative Examples 1 to 3.

Table 2 reports the solubility in various solvents of Polymers P-1 to P-6.

Table 3 reports the test results of polymer films F-1 to F-6 obtained in Examples 1 to 3 and Comparative Examples 1 to 3.

Table 1

| | | Polymer No. | Yield, % | Composition, mol% | Mn | Mw/Mn |
|---|---|---|---|---|---|---|
| Example | 1 | P-1 | 72 | A/B = 43/57 | 778,100 | 1.53 |
| | 2 | P-2 | 63 | A/B = 67/33 | 601,300 | 1.49 |
| | 3 | P-3 | 61 | C/B = 50/50 | 735,800 | 1.24 |
| Comparative Example | 1 | P-4 | 71 | A/B = 7/93 | 313,000 | 2.07 |
| | 2 | P-5 | 50 | A/B = 46/53 | 52,100 | 2.45 |
| | 3 | P-6 | 42 | C/B = 7/93 | 234,000 | 2.26 |

Table 2

| | | Polymer No. | Solubility (as 10 wt% solution) | | | | | | |
|---|---|---|---|---|---|---|---|---|---|
| | | | toluene | decane | hexane | dichloromethane | $M_2$ | $M_3T$ | $D_5$ |
| Example | 1 | P-1 | ○ | ○ | ○ | Δ | ○ | ○ | ○ |
| | 2 | P-2 | ○ | ○ | ○ | × | ○ | ○ | ○ |
| | 3 | P-3 | ○ | ○ | ○ | ○ | ○ | ○ | ○ |
| Comparative Example | 1 | P-4 | ○ | × | × | Δ | × | × | × |
| | 2 | P-5 | ○ | ○ | ○ | Δ | ○ | ○ | ○ |
| | 3 | P-6 | ○ | × | × | ○ | × | × | × |

Rating<br>○: dissolved<br>Δ: partly dissolved<br>×: not dissolved<br>Polysiloxane solvents<br>$M_2$: hexamethyldisiloxane<br>$M_3T$: methyltris(trimethylsiloxy)silane<br>$D_5$: decamethylcyclopentasiloxane

Table 3

| | | Film No | Tg, ˚C | Breaking strength, MPa | Elongation at break, % | Oxygen transmission rate across 0.05-mm film, cc/m$^2$/24h/atm |
|---|---|---|---|---|---|---|
| Example | 1 | F-1 | 302 | 30 | 7 | 390.000 |
| | 2 | F-2 | 318 | 26 | 4 | 570.000 |
| | 3 | F-3 | 283 | 29 | 5 | 64.000 |

(continued)

| | | Film No | Tg, ˚C | Breaking strength, MPa | Elongation at break, % | Oxygen transmission rate across 0.05-mm film, cc/$m^2$/24h/atm |
|---|---|---|---|---|---|---|
| Comparative Example | 1 | F-4 | 360 | 67 | <1 | 44,000 |
| | 2 | F-5 | film not testable | | | |
| | 3 | F-6 | 341 | 69 | <1 | 15,000 |

It is evident from the test results that cycloolefin addition polymers having organosiloxane pendant according to the invention met the requirements of dissolution, film formation, gas transmission, heat resistance and mechanical strength and can be readily prepared using a combination of catalyst and co-catalyst of specific structure.

The cycloolefin addition polymers having organosiloxane pendant according to the invention are easy to form a film and have excellent gas transmission, heat resistance and mechanical strength. They are expected to find application in oxygen enrichment membranes in air conditioners and fuel cells, contact lenses, and the like. In addition, the polymers are fully soluble in organic solvents and polysiloxane solvents and thus expected to find application as film-forming agents in cosmetics.

In respect of numerical ranges disclosed in the present application it will of course be understood that the normal way the technical criterion for the upper limit is different from the technical criterion for the lower limit, i.e. the upper and lower limits are intrinsically distinct proposals.

## Claims

1. A cycloolefin addition polymer obtained from addition polymerization of a cycloolefin-functionalized siloxane having the formula (1) and optionally a cycloolefin compound having the formula (2) in the presence of a catalyst A and a co-catalyst B, structural units derived from the cycloolefin-functionalized siloxane having formula (1) being present in an amount of 35 to 100 mol% of the polymer, the polymer having a number average molecular weight (Mn) of 200,000 to 1,000,000 as measured by GPC versus polystyrene standards, wherein
the cycloolefin-functionalized siloxane has the formula (1):

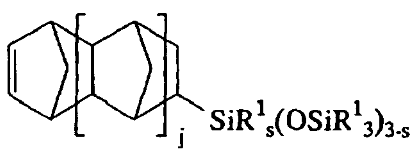

(1)

wherein $R^1$ is each independently a monovalent organic radical free of aliphatic unsaturation, s is an integer of 0 to 2, and j is 0 or 1,
the cycloolefin compound has the formula (2):

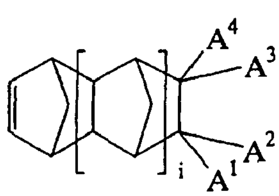

(2)

wherein $A^1$ to $A^4$ are each independently a substituent radical selected from the group consisting of hydrogen, halogen, alkyl, alkenyl, cycloalkyl, aryl, alkoxy, aryloxy and halogenated hydrocarbon radicals having 1 to 10 carbon atoms, or a polar substituent radical selected from the group consisting of oxetanyl and alkoxycarbonyl, or $A^1$ and

$A^2$, or $A^1$ and $A^3$ may bond together to form an alicyclic structure, cyclic imide structure or cyclic acid anhydride structure with the carbon atom(s) to which they are attached, or an aromatic ring structure including said carbon atoms may take the place of $A^1$-$A^4$, and i is 0 or 1,
catalyst A is a transition metal complex in which at least a cyclopentadienyl ligand coordinates with a transition metal selected from nickel and palladium, having the formula (3):

$$ML_nK^1{}_xK^2{}_yK^3{}_z \qquad (3)$$

wherein M is nickel or palladium, L is a cyclopentadienyl ligand selected from cyclopentadienyl and derivatives thereof, $K^1$, $K^2$, and $K^3$ are different negative or neutral ligands, n is an integer of 1 to 3, x, y and z are each independently an integer of 0 to 7, x+y+z is an integer of 0 to 7, and
co-catalyst B is at least one compound selected from the group consisting of (a) an organoaluminum compound, (b) an ionic compound capable of reacting with catalyst A to form a cationic transition metal compound, and (c) a compound capable of promoting dissociation of the ligand from the complex as catalyst A.

**2.** The cycloolefin addition polymer of claim 1 wherein structural units derived from the cycloolefin-functionalized siloxane having formula (1) being present in an amount of 40 to 95 mol% of the polymer, and structural units derived from the cycloolefin compound having formula (2) being present in an amount of 5 to 60 mol% of the polymer.

**3.** The cycloolefin addition polymer of claim 1 or 2 wherein in formula (1), $R^1$ is methyl and s is 0.

**4.** The cycloolefin addition polymer of claim 1 or 2 wherein in formula (1), $R^1$ is methyl and s is 1.

**5.** The cycloolefin addition polymer of any one of claims 1 to 4 wherein in formula (2), all $A^1$ to $A^4$ are hydrogen and i is 0.

**6.** The cycloolefin addition polymer of any one of claims 1 to 5 which has a polydispersity index (Mw/Mn) of 1.0 to 3.0, as given by weight average molecular weight (Mw) divided by number average molecular weight (Mn), measured by GPC versus polystyrene standards.

**7.** The cycloolefin addition polymer of any one of claims 1 to 6 which has a glass transition temperature of 200 to 400°C.

**8.** The cycloolefin addition polymer of any one of claims 1 to 7 which takes the form of a membrane, sheet or film.

**9.** A method for preparing the cycloolefin addition polymer of any one of claims 1 to 8, comprising effecting addition polymerization of a cycloolefin-functionalized siloxane having the formula (1) and optionally a cycloolefin compound having the formula (2) in the presence of a catalyst A and a co-catalyst B, wherein
the cycloolefin-functionalized siloxane has the formula (1):

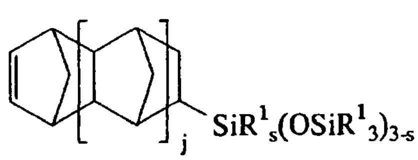

(1)

wherein $R^1$ is each independently a monovalent organic radical free of aliphatic unsaturation, s is an integer of 0 to 2, and j is 0 or 1,
the cycloolefin has the formula (2):

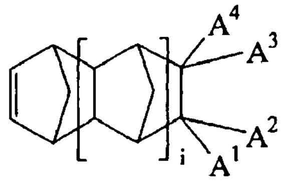

(2)

wherein $A^1$ to $A^4$ are each independently a substituent radical selected from the group consisting of hydrogen, halogen, alkyl, alkenyl, cycloalkyl, aryl, alkoxy, aryloxy and halogenated hydrocarbon radicals having 1 to 10 carbon atoms, or a polar substituent radical selected from the group consisting of oxetanyl and alkoxycarbonyl, or $A^1$ and $A^2$, or $A^1$ and $A^3$ may bond together to form an alicyclic structure, cyclic imide structure or cyclic acid anhydride structure with the carbon atom(s) to which they are attached, or an aromatic ring structure including said carbon atoms may take the place of $A^1$-$A^4$, and i is 0 or 1,
catalyst A is a transition metal complex in which at least a cyclopentadienyl ligand coordinates with a transition metal selected from nickel and palladium, having the formula (3):

$$ML_nK^1_xK^2_yK^3_z \quad (3)$$

wherein M is nickel or palladium, L is a cyclopentadienyl ligand selected from cyclopentadienyl and derivatives thereof, $K^1$, $K^2$, and $K^3$ are different negative or neutral ligand, n is an integer of 1 to 3, x, y and z are each independently an integer of 0 to 7, x+y+z is an integer of 0 to 7, and
co-catalyst B is at least one compound selected from the group consisting of (a) an organoaluminum compound, (b) an ionic compound capable of reacting with catalyst A to form a cationic transition metal compound, and (c) a compound capable of promoting dissociation of the ligand from the complex as catalyst A.

**10.** The method of claim 9 wherein the addition polymerization is effected in an inert gas atmosphere at a temperature of -20 to 100˚C.

# FIG.1

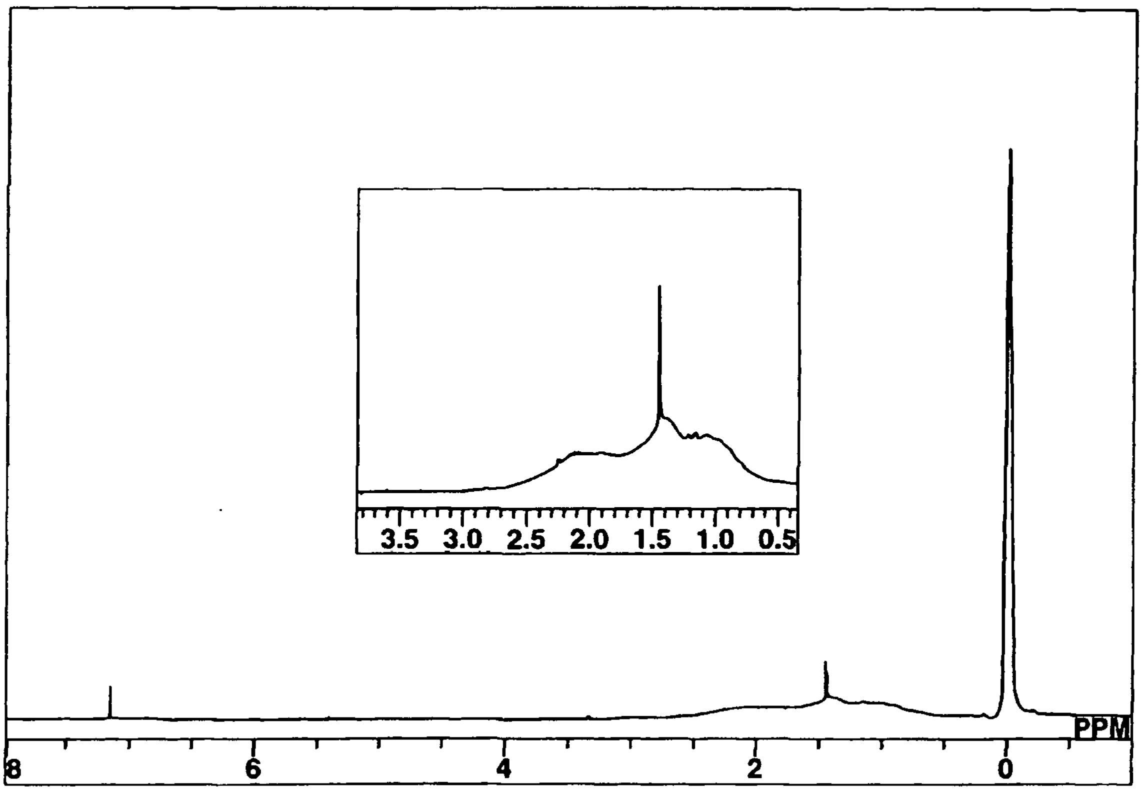

FIG.2

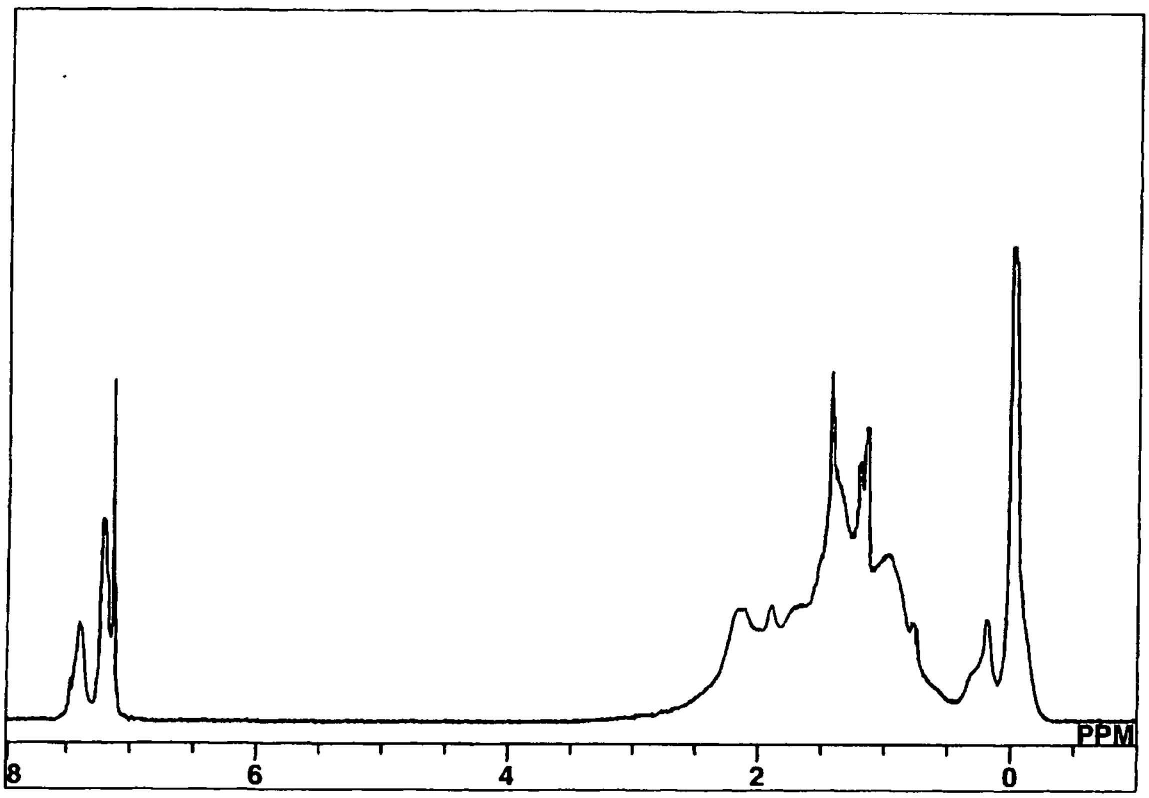

Europäisches Patentamt
European Patent Office
Office européen des brevets

# EUROPEAN SEARCH REPORT

Application Number
EP 10 25 0141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 1 849 806 A1 (SHINETSU CHEMICAL CO [JP]) 31 October 2007 (2007-10-31)<br>* paragraphs [0001], [0016], [0017] *<br>* page 3 - page 4 *<br>----- | 1-10 | INV.<br>C08F230/08<br>C08F4/70<br>C08F32/08<br>B01D69/00<br>B01D71/44 |
| Y | E.FINKELSHTEIN, K.MAKOVETSKII,M.GRINOLTS,Y.ROGAN.T.GOLENKO.ESTARRANIKOVA,Y.YAMPOLSKII,V.SHANTAROVITCH,T.SUZUKI: "Addition-Type polynorbornenes with (SiCH3)3 Side Groups: Synthesis, Gas Permeability, and Free volume"<br>MACROMOLECULES,<br>vol. 39, 9 December 2006 (2006-12-09), pages 7022-7029, XP002576350<br>* page 7022, paragraph 1 *<br>* page 7022 - page 7023 *<br>* page 7023, paragraph 1; table 1 *<br>* page 7025, paragraph 5; figure 3 *<br>----- | 1-10 | |
| Y | EP 1 826 221 A1 (UNIV NIHON [JP] UNIV NIHON [JP]; JSR CORP [JP])<br>29 August 2007 (2007-08-29)<br>* paragraph [0005] - paragraph [0007] *<br>* paragraph [0038] *<br>-----<br>-/-- | 1-10 | TECHNICAL FIELDS SEARCHED (IPC)<br>C08F<br>B01D |

The present search report has been drawn up for all claims

| Place of search | Date of completion of the search | Examiner |
|---|---|---|
| The Hague | 9 April 2010 | Plehiers, Mark |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 10 25 0141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FINKELSHTEIN E SH ET AL: "Addition polymerization of silyl-containing norbornenes in the presence of Ni-based catalysts" JOURNAL OF MOLECULAR CATALYSIS. A, CHEMICAL, ELSEVIER, AMSTERDAM, NL LNKD- DOI:10.1016/J.MOLCATA.2006.04.035, vol. 257, no. 1-2, 1 September 2006 (2006-09-01), pages 9-13, XP025155866 ISSN: 1381-1169 [retrieved on 2006-09-01] * the whole document * ----- | 1-10 | |
| A | EP 1 878 488 A1 (SHINETSU CHEMICAL CO [JP]) 16 January 2008 (2008-01-16) * paragraphs [0002] - [0011] * ----- | 1-10 | |
| | | | TECHNICAL FIELDS SEARCHED (IPC) |

The present search report has been drawn up for all claims

| Place of search | Date of completion of the search | Examiner |
|---|---|---|
| The Hague | 9 April 2010 | Plehiers, Mark |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 25 0141

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2010

| Patent document cited in search report | Publication date | Patent family member(s) | Publication date |
|---|---|---|---|
| EP 1849806 A1 | 31-10-2007 | JP 2007291150 A | 08-11-2007 |
| | | US 2007249796 A1 | 25-10-2007 |
| EP 1826221 A1 | 29-08-2007 | EP 2033978 A1 | 11-03-2009 |
| | | WO 2006064814 A1 | 22-06-2006 |
| | | US 2009264608 A1 | 22-10-2009 |
| EP 1878488 A1 | 16-01-2008 | JP 4242403 B2 | 25-03-2009 |
| | | JP 2008018363 A | 31-01-2008 |
| | | US 2008011406 A1 | 17-01-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H04001652 B
- JP H05285216 A
- JP H0488004 A
- JP H08198881 A
- JP 2001079375 A
- JP 2007291150 A


### Non-patent literature cited in the description


- **H. Yamazaki et al.** *Bull. Chem. Soc. Jpn.,* 1964, vol. 37, 907